# EUROPEAN PATENT SPECIFICATION

(11) **EP 1 068 801 B1**
(45) Date of publication and mention of the grant of the patent: **17.04.2002**
(21) Application number: 99830445.5
(22) Date of filing: 14.07.1999
(51) Int. Cl.: A22C 11/00

(54) **A method for forming elastic rings into bunches for binding chickens, roasts and various meat products**
Verfahren zur Bildung elastischer Ringe in Bündel zum Binden von Hühnern, Bratwürsten oder Fleisch
Procédé pour la formation des anneaux élastiques dans un faisceau, pour liage de poule, de saucisse à rôtir ou de la viande

(43) Date of publication of application: 17.01.2001
(73) Proprietor: Fra Production s.p.a., 14010 Cisterna D'Asti (AT) (IT)
(72) Inventor: Mignone, Giuseppe, 14010 Cisterna d'Asti (AT) (IT)
(74) Representative: Robba, Pierpaolo

(56) References cited:
- DE-C- 19 700 891
- FR-A- 2 579 871
- US-A- 4 573 241
- US-A- 5 772 499

## Description

The present invention refers to a method for forming elastic rings into bunches for binding chickens, roasts and various meat products, suitable for making quicker said binding process.

In particular, using the present method as will be explained later, there are several kinds of bunches of elastic rings, each kind being suitable for binding a particular meat product (chicken, roast and/or similar).

Today are present on the market elastic rings for binding chickens, roasts, etc., having several sizes and colours and packaging, pell-mell inserted into bags, boxes or bunches bound on one side.

The bunch bound on one side has the disadvantage that it occupies the whole hand and, if it is maintained bound on one side for maintaining together the rings, it is very difficult to unstring them one by one from the bunch fastening, as the rings are mixed up.

If the bunch fastening is untied, a whole hand is necessary to keep it together, while, in order to work correctly, both hands should be free.

Therefore it is necessary to maintain the bunch bound on one side or the rings mixed up, and take them one by one wasting a lot of time.

Object of the present invention it is to overcome said drawbacks providing a practical method which allows a better efficiency in the above mentioned operations.

Another object is it facilitate the singling out of the elastic rings bunch suitable for a particular pairing or product.

The essential characteristics of the present invention will become more evident from the following claims.

The method will be now described in detail with particular reference to the attached drawings, provided as a non-limitative example, wherein:
Figure 1 shows a bunch bound on one side, according to the prior art;
Figure 2 shows the bunch of Figure 1 untied on one side and grasped by a hand, according to the prior art;
Figure 3 shows the bunch of Figure 1 untied on one side, grasped by a hand while the other hand takes said rings, one after the other, from said bunch, according to the prior art;
Figure 4 shows schematically how the elastic rings are tidily arranged according to the system of the present invention;
Figure 5 shows a paper strip or similar inserted between the walls of a plurality of rings, strip that separates said walls;
Figure 6 shows the fingers of a user between the walls of an elastic rings bunch while the paper strip is broken; on the forefinger is shown said paper strip without said elastic rings;
Figure 7 shows the bunch, hold by fingers, while the thumb separates a ring;
Figure 8 shows two free hands pulling a ring which will be placed on a roast.

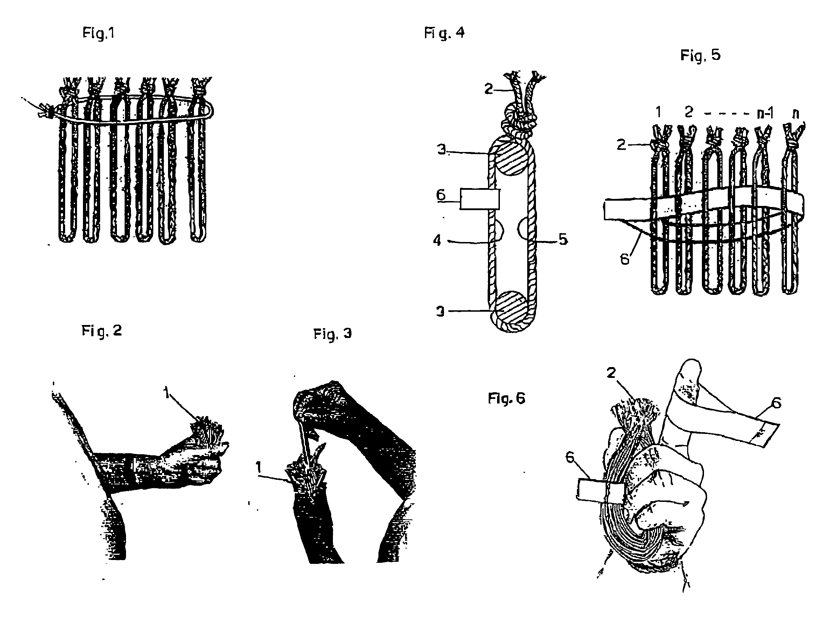

As stated above, Figures 1 to 3 refers to the prior art, wherein the reference number 1 points out the bunches and reference 2 the elastic rings bound on one side in said bunches 1. As stated before, the bunch 1 bound on one side occupies the whole hand and, if it is maintained bound, it is very difficult to unstring the rings 2 one by one from the bunch fastening, as the rings 2 are mixed together.

If the bunch 1 fastening is untied, a whole hand is necessary to keep it together, while, in order to work correctly, both hands should be free.

Therefore it is necessary to maintain the bunch 1 bound on one side or the rings 2 mixed up, and take them one by one wasting a lot of time.

Using the method of the present invention, the elastic rings 2 (Fig. 4) are packaged while they are slightly tensioned between two rods 3, appropriately spaced.

Onto said rods3, said elastic rings 2 are pushed one near to the other in order to form two walls 4 and 5.

One of these walls, the wall 4 in figure, is bound by a strip 6 made of paper or other suitable material (see figures 4 and 5), having different colours in order to distinguish their use. For example, the rings suitable for binding roasts- will be marked by a brown strip 6, those for binding chickens by a yellow strip 6 and so on; in this way it will be very easy to find the bunch 7 of elastic rings 2 suitable for a particular product or coupling.

It is evident that the choice of the different colours according to the use of the bunches 7 can be used independently or contemporaneously to a possible colouring of the elastic rings 2.

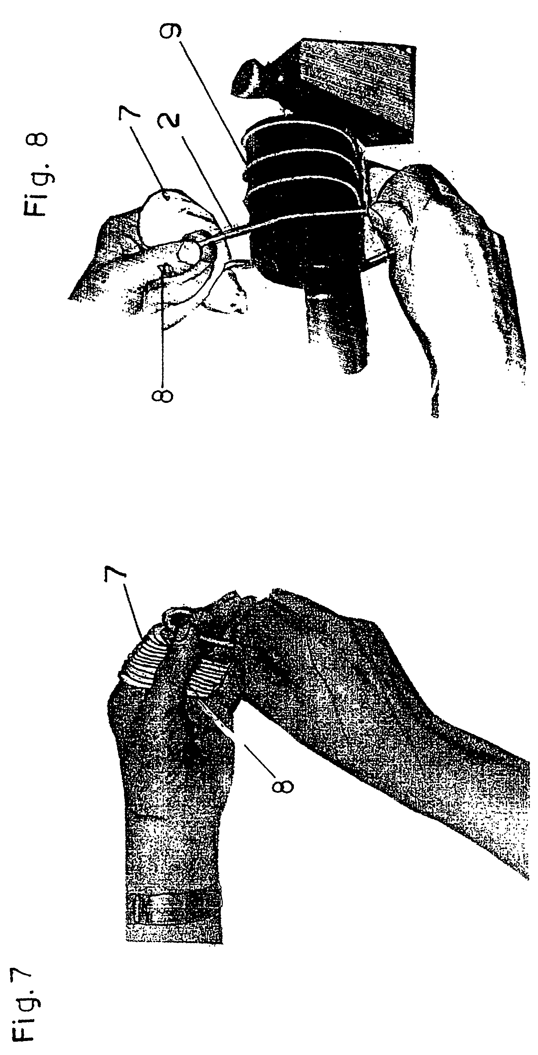

According to the above described method bunches 7 of rings 2 are provided bound and ordered, having the two walls 4 and 5 spaced, allowing the user to insert the fingers of a hand in said bunch 7 of ordered elastic rings and therefore to break the paper strip 6, having in its hand said elastic rings already ordered and ready to be used (Figure 6).

If a bunch 7 is inserted on the fingers, for example the fingers of the left hand (Figure 7) as a glove opened on its top, the same hand will be almost free, as the thumb 8 is outside and, if necessary, it allows the unstringing of the rings one by one.

When it is necessary to use the left hand, for example in order to enlarge the ring 2 (Figure 8) and bind the chicken, roast or other 9, the functionality of the hand is not precluded and it can be used as usual, because the fingers work as a storage for the rings 2, remaining free for other functions.

In this case they work together with the right hand for enlarging the elastic ring 2 for binding the chicken 9, roast or other.

## Claims

1. A method for forming elastic rings (2) into bunches for binding chickens, roasts and various meat products, **characterised in that** each of said bunches (7) of elastic rings (2) is formed by placing said elastic rings (2) slightly tensioned onto two rods (3), appropriately spaced, **in that** on said rods (3) said elastic rings (2) are pushed one near to the other in order to form two walls (4, 5), and **in that** one of these walls (4, 5) is bound by a strip (6) made of paper or other suitable material.

2. A method according to claim 1, **characterised in that** said strip (6) has a different colour according to the kind of material to be bound (chicken, roast or similar) for which it is designed.

3. A method according to claim 1 and 2, **characterised in that** said rings (2) are bound and ordered, having the two walls spaced each other.

4. A method according to preceding claims, **characterised in that** the bunches (7) of said elastic rings (2) are made of a checked number of elastic rings (2).

5. A method according to preceding claims, **characterised in that** the user, inserted the fingers of the hand in said bunch (7) of ordered elastic rings, can break the paper or similar strip (6), having in its hand said elastic rings (2) ready to be used.

6. A method according to preceding claims, **characterised in that**, if a bunch (7) is inserted on the fingers of a hand as a glove opened on its top, the same hand will be almost free, as the thumb (8) is outside and, if necessary, it allows the unstringing of the rings (2) one by one.

7. A method according to preceding claims, **characterised in that** when it is necessary to use the hand inserted in said bunch (7), for example in order to enlarge the ring (2) and bind the chicken, roast or other (9), the functionality of said hand is not precluded and it can be used as it was free, because the fingers of said hand work as a storage (7) or a supply of rings (2), remaining free for other functions.

8. A method according to preceding claims, **characterised in that** said fingers of said hand inserted in the bunch of rings (2) work together with the other hand for enlarging the elastic ring (2) and for binding the chicken, roast or other (9).

## Patentansprüche

1. Verfahren zum Anordnen von elastischen Ringen (2) in Bündeln zum Umbinden von Hühnern oder Hähnchen, Braten und verschiedenen Fleischprodukten, **dadurch gekennzeichnet, dass** jedes der Bündel (7) von elastischen Ringen (2) gebildet wird, indem die elastischen Ringe (2) leicht gespannt auf zwei in geeignetem Abstand angeordneten Stäben (3) platziert werden, dass die elastischen Ringe (2) auf den Stäben (3) in die Nähe voneinander geschoben werden, um zwei Wände (4, 5) zu bilden, und dass eine dieser Wände (4, 5) mit einem aus Papier oder einem anderen geeigneten Material bestehenden Streifen oder Band (6) umbunden wird.

2. Verfahren nach Anspruch 1, **dadurch gekennzeichnet, dass** das Band (6) entsprechend der Art des zu umbindenden Materials (Huhn oder Hähnchen, Braten oder ähnliches), für das es bestimmt ist, eine unterschiedliche Farbe aufweist.

3. Verfahren nach Anspruch 1 und 2, **dadurch gekennzeichnet, dass** die Ringe (2) zusammengebunden und geordnet werden, wobei die beiden Wände im Abstand voneinander angeordnet sind.

4. Verfahren nach den vorangehenden Ansprüchen, **dadurch gekennzeichnet, dass** die Bündel (7) der elastische Ringe (2) aus einer kontrollierten Anzahl von elastischen Ringen (2) hergestellt werden.

5. Verfahren nach den vorangehenden Ansprüchen, **dadurch gekennzeichnet, dass** der Benutzer, der die Finger der Hand in das Bündel (7) von geordneten elastischen Ringen eingeführt hat, das Band (6) aus Papier oder dergleichen zerreißen kann, wobei er die elastischen Ringe (2) gebrauchsbereit in seiner Hand hat.

6. Verfahren nach den vorangehenden Ansprüchen, **dadurch gekennzeichnet, dass** wenn ein Bündel (7) als ein an seinem oberen Ende offener Handschuh über die Finger einer Hand gestreift wird, dieselbe Hand nahezu unbehindert sein wird, da sich der Daumen (8) außerhalb befindet, und sie es, falls notwendig, gestattet, die Ringe (2) einzeln abzuziehen.

7. Verfahren nach den vorangehenden Ansprüchen, **dadurch gekennzeichnet, dass** wenn es notwendig ist, die in das Bündel (7) eingeführte Hand zu benutzen, zum Beispiel um den Ring (2) zu erweitern und das Huhn oder Hähnchen, den Braten oder sonstiges (9) zu umbinden, die Gebrauchsfähigkeit der Hand nicht eingeschränkt ist, und sie benutzt werden kann als ob sie frei wäre, weil die Finger der Hand als Speicher (7) oder Vorrat von Ringen (2) fungieren, wobei sie für andere Aufgaben frei bleiben.

8. Verfahren nach den vorangehenden Ansprüchen, **dadurch gekennzeichnet, dass** die in das Bündel von Ringen (2) eingeführten Finger der Hand mit der anderen Hand zusammenarbeiten, um den elastischen Ring (2) aufzuweiten und um das Huhn oder Hähnchen, den Braten oder sonstiges (9) zu umbinden.

## Revendications

1. Procédé pour former des liasses d'anneaux élastiques (2) pour ficeler des poulets, rôtis et divers produits carnés, **caractérisé en ce que** chacune desdites liasses (7) d'anneaux élastiques (2) est formée en plaçant lesdits anneaux élastiques (2) légèrement tendus sur deux tiges (3), correctement espacées, **en ce que** sur lesdites tiges (3), lesdits anneaux élastiques (2) sont poussés l'un près de l'autre afin qu'ils forment deux parois (4, 5), et **en ce qu'**une de ces parois (4, 5) est attachée par une bande (6) de papier ou autre matériau approprié.

2. Procédé selon la revendication 1, **caractérisé en ce que** ladite bande (6) a une couleur différente en fonction du type de produit à ficeler (poulet, rôti ou autre produit similaire) auquel elle est destinée.

3. Procédé selon la revendication 1 et 2, **caractérisé en ce que** lesdits anneaux- (2) sont attachés et rangés, les deux parois étant espacées l'une par rapport à l'autre.

4. Procédé selon les revendications précédentes, **caractérisé en ce que** les liasses (7) desdits anneaux élastiques (2) sont constituées d'un nombre vérifié d'anneaux élastiques (2).

5. Procédé selon les revendications précédentes, **caractérisé en ce que** l'utilisateur, une fois les doigts de la main insérés dans ladite liasse (7) d'anneaux élastiques rangés, peut casser la bande de papier ou de matériau similaire (6), ayant dans sa main lesdits anneaux élastiques (2) prêts à être utilisés.

6. Procédé selon les revendications précédentes, **caractérisé en ce que**, si une liasse (7) est insérée sur les doigts d'une main comme un gant ouvert à l'extrémité, cette même main est presque libre, étant donné que le pouce (8) reste en dehors et, si nécessaire, les anneaux (2) peuvent être détachés un par un.

7. Méthode selon les revendications précédentes **caractérisée en ce que**, lorsqu'il -est nécessaire d'utiliser la main insérée dans ladite liasse (7), par exemple afin d'étirer l'anneau (2) et de ficeler le poulet, rôti ou autre (9), la fonctionnalité de ladite main n'est pas exclue et elle peut être utilisée comme si elle était libre, étant donné que les doigts de ladite main servent à stocker (7) ou à fournir des anneaux (2) tout en restant libres pour d'autres fonctions.

8. Procédé selon les revendications précédentes, **caractérisé en ce que** lesdits doigts de ladite main insérée dans ledit paquet d'anneaux (2) agissent conjointement avec l'autre main pour étirer l'anneau élastique (2) et pour ficeler le poulet, rôti ou autre (9).
